# EUROPÄISCHE PATENTSCHRIFT

(11) **EP 1 490 254 B1**
(45) Veröffentlichungstag und Bekanntmachung des Hinweises auf die Patenterteilung: **30.04.2008**
(21) Anmeldenummer: 03704697.6
(22) Anmeldetag: 27.02.2003
(51) Int. Cl.: B62D 25/14

(54) **QUERTRÄGER ZWISCHEN ZWEI SEITLICHEN RANDBEREICHEN EINER FAHRZEUGSTRUKTUR**
CROSSBEAM BETWEEN TWO LATERAL EDGE ZONES OF A VEHICLE STRUCTURE
TRAVERSE ENTRE DEUX ZONES DE BORD LATERALES D'UNE STRUCTURE DE VEHICULE

(30) Priorität: 30.03.2002 DE 10214473
(43) Veröffentlichungstag der Anmeldung: 29.12.2004
(60) Teilanmeldung: 07001844.5
(73) Patentinhaber: Bayerische Motoren Werke Aktiengesellschaft, 80809 München (DE)
(72) Erfinder: WIEDEMANN, Ulrich, 85604 Zorneding (DE); SCHEER, Jürgen, 81377 München (DE)
(86) Internationale Anmeldenummer: PCT/EP2003/001988
(87) Internationale Veröffentlichungsnummer: WO 2003/082655

(56) Entgegenhaltungen:
- EP-A- 1 142 739
- EP-A- 1 160 147
- WO-A-02/04253
- WO-A-02/30585
- WO-A-91/10582
- DE-A- 4 232 846

## Beschreibung

Die Erfindung betrifft einen Querträger zwischen zwei seitlichen Randbereichen einer Fahrzeugstruktur gemäß dem Oberbegriff des Patentanspruchs 1.

Derartige Querträger erstrecken sich im Rahmen einer Kraftfahrzeugstruktur unter anderem zwischen den vorderen bzw. A-Säulen und erfüllen unterschiedliche Funktionen. Sie dienen zum einen im weitesten Sinne als Cockpitträger bzw. als Halteeinrichtung für zahlreiche Anbauteile, wie zum Beispiel die Befestigung von Elementen der Lenksäule, Teile von Airbagsystemen, Komponenten von Lüftungs- und / oder Klimatisierungseinrichtungen, ein Handschuhfach, etc. Darüber hinaus haben solche Querträger auch eine Versteifungsfunktion für die Fahrzeugstruktur.

Traditionell werden die Querträger häufig als Stahlrohrkonstruktion ausgebildet, die mit zahlreichen, jeweils individuell auf die anzubindenden Anbauelemente ausgerichteten Halteelementen verschweißt ist. Eine solche Stahlkonstruktion kann in Abhängigkeit von der jeweiligen konstruktiven und / oder werkstofflichen Ausbildung eine bedeutende Masse aufweisen. Die aus Gründen des Umweltschutzes geforderte Treibstoffeinsparung setzt jedoch eine Massereduzierung der Fahrzeuge voraus.

Aus der EP 1 142 739 A1 ist ein rohrförmiger Hohlträger bekannt. Zur Herstellung des Hohlträgers wird eine Platine gerollt. Der Hohlträger kann lokal unterschiedliche Wandstärken aufweisen. Zudem ist aus der DE 42 32 846 A1 ein gattungsbildender Cockpitträger eines Kraftfahrzeugs bekannt, der in axialer Richtung aus mehreren Einzelteilen besteht, die in ihrer Steifigkeit und Wandstärke an die jeweiligen Anforderungen angepasst sind.

Ferner ist aus der DE 197 15 069 A1 ein Querträger zwischen zwei seitlichen Randbereichen einer Fahrzeugstruktur mit wenigstens einem Halteelement zur Anbindung von Fahrzeugfunktionselementen bekannt. Der Querträger ist in wenigstens zwei, miteinander lösbar in Verbindung stehende Teilabschnitte unterteilt. Die Teilabschnitte können aus einem Leichtbauwerkstoff, wie zum Beispiel aus einem Leichtmetall, einer Leichtmetalllegierung oder einem faserverstärkten Kunststoff, bestehen. Unter Berücksichtigung der durch Legierungsbildung erzielbaren Festigkeitsverhältnisse kann sich bei gleicher Beanspruchbarkeit gegenüber dem Werkstoff Stahl eine Massereduzierung ergeben. Innerhalb der Gruppe der Leichtmetalle kommen zahlreiche werkstoffliche Varianten in Betracht, wobei als Basiswerkstoff vorzugsweise Aluminium oder Magnesium zum Einsatz kommen.

Aufgabe der Erfindung ist es, einen leicht bauenden Querträger zu schaffen.

Diese Aufgabe wird durch die Merkmale des Patentanspruchs 1 gelöst.

Kerngedanke der Erfindung ist es, dass der einteilige Querträger in axialer Richtung aus zumindest zwei Abschnitten mit unterschiedlichen Wandstärken und gegebenenfalls mit unterschiedlichen Außendurchmessern besteht, wobei sich zwischen den Abschnitten jeweils ein kontinuierlicher Übergangsbereich befindet. Bei den meisten Querträgern ist eine hohe Steifigkeit nur auf der Fahrerseite notwendig, insbesondere wenn sie eine Tunnelabstützung aufweisen. Beim erfindungsgemäßen Querträger wird diese Erkenntnis dazu genutzt, einen leichten Querträger zu bilden, indem der Abschnitt des Querträgers auf der Beifahrerseite eine niedrigere Wandstärke aufweist. Nach dem heutigen Erkenntnisstand ist auf der Beifahrerseite eine Wandstärke von maximal 50% der Wandstärke auf der Fahrerseite vollkommen ausreichend. Einher mit der deutlich geringeren Wandstärke auf der Beifahrerseite geht eine deutliche Gewichtsersparnis des Querträgers. So kann der erfindungsgemäße Querträger ohne große Mehrkosten einen deutlichen Beitrag zur geforderten Gewichtsreduzierung des Gesamtfahrzeugs beitragen, ohne funktional relevante Einbußen bezüglich der Biege- und Beulsteifigkeit in Kauf nehmen zu müssen.

Neben dieser ersten groben Unterscheidung zwischen Fahrer- und Beifahrerseite sind aber auch noch wesentlich feinere Abstufungen denkbar. So kann der erfindungsgemäße Querträger beispielsweise an den Enden im Bereich der Befestigung an die restliche Karosserie größere Wandstärken aufweisen als in den unmittelbar daran angrenzenden Abschnitten des Querträgers. Auch im Bereich der Anbindung der Lenksäule kann der Querträger gezielt eine größere Wandstärke aufweisen. Auch kann der Querträger aus Gründen des zur Verfügung stehenden Bauraums im Bereich eines Beifahrerairbags nach hinten zurückversetzt sein. Der Bereich, an dem der Querträger zurückspringt, stellt dabei eine Schwachstelle dar, die zum Beispiel durch dickere Wandstärken im Bereich dieses Rücksprungs kompensiert werden kann. Zusammenfassend lässt sich also sagen, dass der erfindungsgemäße Querträger entsprechend der Anforderungen mehrfach wechselnde Wandstärken aufweisen kann.

Die Übergangsbereiche können dabei nicht nur unterschiedliche Außendurchmesser zwischen den Abschnitten aufgrund unterschiedlicher Wandstärken ausgleichen, sondern schaffen ganz allgemein einen kontinuierlichen Übergang zwischen unterschiedlichen Außendurchmessern der Abschnitte. So kann beispielsweise ein erster Abschnitt einen Außendurchmesser von 80 mm aufweisen, wohin gegen ein zweiter Abschnitt mit der dünneren Wandstärke einen Außendurchmesser von nur 40 mm hat. Der Übergangsbereich zwischen den beiden Abschnitten schafft einen kontinuierlichen Übergang zwischen den unterschiedlichen Wandstärken und Außendurchmessern.

Der Querträger ist im Gegensatz zu den bekannten leicht bauenden Querträgern einteilig hergestellt. Somit müssen keine einzelnen Teilabschnitte gefügt werden. Dadurch entstehen keine unerwünschten Fügetoleranzen und es gibt keine dynamische Schwächung an Fügestellen.

Der Querträger besteht in einer vorteilhaften Ausgestaltung aus Stahl. Stahl bietet als Werkstoff eine hohe Steifigkeit und ist gut schweißbar. Damit ist die Anbringung von Anbauelementen in bewährter Weise möglich.

Alternativ besteht der Querträger günstigerweise aus einem Leichtmetall, wie Aluminium oder Magnesium bzw. einer Aluminium- oder Magnesiumlegierung. Leichtmetalle weisen ein relativ geringes spezifisches Gewicht und eine vergleichsweise hohe Steifigkeit auf, sodass sie zur Gewichtseinsparung prädestiniert sind.

Der Querträger weist gemäß der Erfindung einen rohrförmigen Querschnitt auf. Als rohrförmig gilt hier jede Querschnittsform, die einen Hohlraum ummantelt. Die Form des Hohlraums oder die äußere Form des Querträgers sind dabei unerheblich. Ein Querträger mit einem rohrförmigen Querschnitt weist bezogen auf das Gewicht hohe axiale Flächenmomente und Widerstandsmomente auf.

Der Querträger wird gemäß der Erfindung aus variabel gewalzten Platinen hergestellt. Die variabel gewalzten Platinen werden anschließend beispielsweise zu einem Rohr gerollt, das dann als Querträger dient. Derartige variabel gewalzte Platinen - auch "tailor rolled blanks" genannt - weisen definiert unterschiedliche Blechdickenverläufe quer zur Walzrichtung auf. Die Dickenübergänge erfolgen kontinuierlich. Ein aus einer solchen variabel gewalzten Platine gerolltes Rohr kann anschließend in die für den Querträger benötigte Form gebogen werden.

Alternativ zu der Erfindung könnte der Querträger auch durch ein variables Extrusionsverfahren hergestellt sein. Bei solchen variablen Extrusionsverfahren kann während des Extrusionsprozesses das Mundstück durch Schieber variiert werden. Derartige Extrusionsverfahren kommen bereits bei der Extrusion von Dichtungen zum Einsatz und es wird daran gearbeitet, solche variablen Extrusionsverfahren auch bei Leichtmetallen industriell einsetzen zu können.

Der extrudierte bzw. aus einer variabel gewalzten Platine hergestellte Querträger mit einem rohrförmigen Querschnitt kann günstigerweise im Innenhochdruckverfahren gebogen und / oder kalibriert sein. Dieses Verfahren ermöglicht es, auch komplizierte Umformvorgänge am Querträger durchzuführen. So kann der gesamte Querträger kalibriert werden, um zum Beispiel mögliche Toleranzabweichungen gegenüber den Sollmaßen auszugleichen.

Der Übergangsbereich zwischen dem ersten Abschnitt mit der hohen Wandstärke und dem zweiten Abschnitt mit der niedrigen Wandstärke wird entsprechend den statischen und dynamischen Anforderungen ausgelegt. Dabei erscheinen Steigungen im Übergangsbereich von 1/40 oder kleiner am zielführendsten. Die Wandstärke kann sich am Außendurchmesser, am Innendurchmesser oder sowohl am Außen- als auch am Innendurchmesser verringern.

In der Zeichnung ist ein Ausführungsbeispiel der Erfindung dargestellt, das im folgenden näher beschrieben wird. Die Figuren zeigen in schematischer Darstellungsweise:

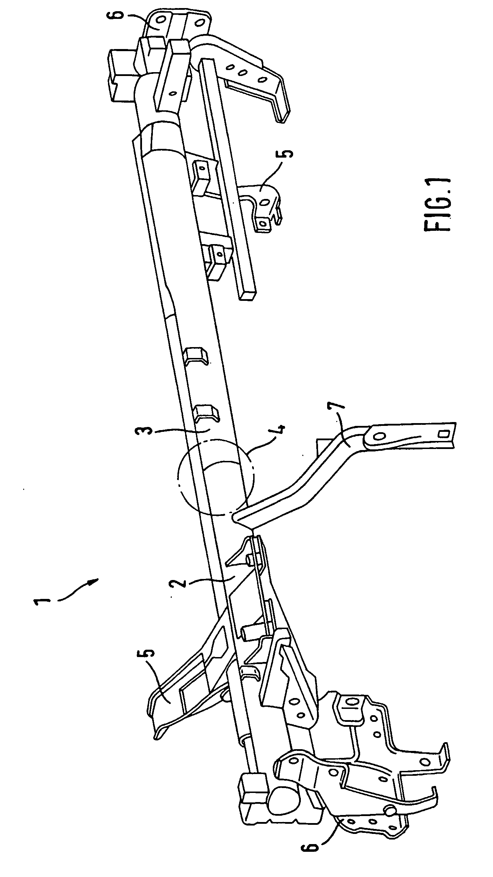

- Fig. 1: eine perspektivische Ansicht eines erfindungsgemäßen Querträgers und

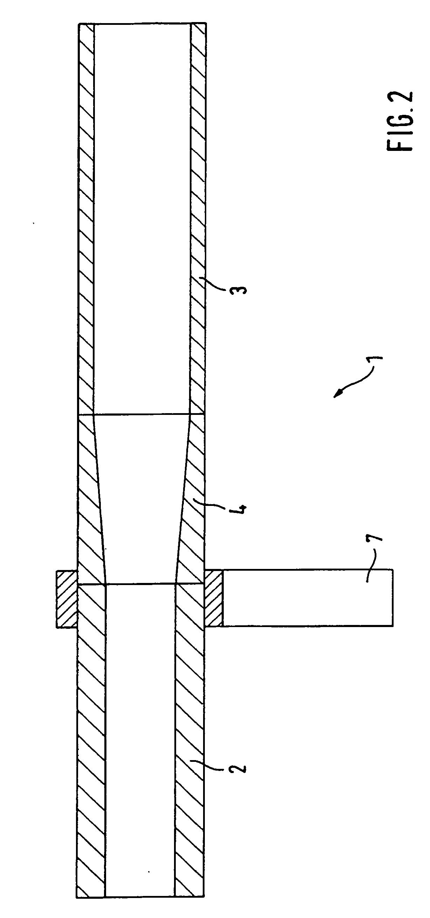

- Fig. 2: einen Längsschnitt durch den in Fig. 1 dargestellten Querträger.

Ein in einem Kraftfahrzeug als Cockpitträger dienender Querträger 1 aus Stahl mit einem rohrförmigen Querschnitt besteht aus einem ersten Abschnitt 2 auf der Fahrerseite mit einer hohen Wandstärke und einem zweiten Abschnitt 3 auf der Beifahrerseite mit einer niedrigen Wandstärke. Zwischen dem ersten und dem zweiten Abschnitt 2 und 3 befindet sich ein Übergangsbereich 4. Der Übergangsbereich 4 schafft mit einer Steigung von 1/40 einen kontinuierlichen Übergang zwischen den beiden Abschnitten 2 und 3.

An den Querträger 1 sind mehrere Halteelemente 5 für hier nicht dargestellte Anbauelemente angeschweißt. Als Anbauelement wird an den Halteelementen 5 beispielsweise eine Lenksäule oder ein Beifahrerairbag-Modul befestigt. Am linken und am rechten Ende des Querträgers 1 sind Befestigungselemente 6 angebracht, die eine schnelle und bequeme Montage des Querträgers 1 an der restlichen Fahrzeugkarosserie ermöglichen. Im mittleren Bereich weist der Querträger 1 eine Tunnelabstützung 7 auf, die beispielsweise die durch die Lenksäule in den ersten Abschnitt 2 auf der Fahrerseite eingeleiteten Kräfte mit aufnehmen kann. Aufgrund dieser Tunnelabstützung 7 sind auf der Beifahrerseite die Kräfte, denen der Querträger 1 mit dem zweiten Abschnitt 3 standhalten muss, deutlich geringer als auf der Fahrerseite. Daher kann dieser zweite Abschnitt 3 eine deutlich geringere Wandstärke aufweisen, als der erste Abschnitt 2. Dies führt zu einer Reduzierung der Masse des Querträgers 1 um ca. 0,5 bis 1,0 Kilogramm, ohne dass damit nennenswert höhere Kosten verbunden wären.

Der Querträger 1 ist aus einer gerollten Platine hergestellt, die zuvor variabel gewalzt wurde. Dieses Herstellverfahren ist beispielsweise in der EP 1 074 317 A1 beschrieben. Der zweite Abschnitt 3 hat dabei eine Wandstärke von maximal 50% der Wandstärke des ersten Abschnitts 2. Der Außendurchmesser des Querträgers 1 kann dabei über seine ganze Länge gleich bleiben. Die Reduzierung der Wandstärke im zweiten Abschnitt 2 wirkt sich dann nur auf den Innendurchmesser aus. Dies hat den Vorteil, dass die Auslegung der Wandstärken im ersten und zweiten Abschnitt 1 und 2 unabhängig vom Abstimmprozess für die Halteelemente 5 und Befestigungselemente 6 erfolgen kann. Eine Änderung der Wandstärken kann somit sogar noch in der Serie erfolgen, ohne dass die Halteelemente 5 und die Befestigungselemente 6 erneut angepasst werden müssen.

## Patentansprüche

1. Querträger zwischen zwei seitlichen Randbereichen einer Fahrzeugstruktur mit wenigstens einem Halteelement zur Anbindung von Fahrzeugfunktionselemente wobei der Querträger als Cockpitträger in einem Kraftfahrzeug dient und in axialer Richtung aus zumindest zwei Abschnitten (2, 3) mit unterschiedlichen Wandstärken und gegebenenfalls mit unterschiedlichen Außendurchmessern besteht, **dadurch gekennzeichnet, dass** der einteilige Querträger (1) einen rohrförmigen Querschnitt aufweist, aus variabel gewalzten Platinen hergestellt ist, wobei sich zwischen den Abschnitten (2, 3) ein kontinuierlicher Übergangsbereich (4) befindet.

2. Querträger nach Anspruch 1, **dadurch gekennzeichnet, dass** der Querträger (1) aus Stahl besteht.

3. Querträger nach Anspruch 1, **dadurch gekennzeichnet, dass** der Querträger (1) aus einem Leichtmetall, wie Aluminium oder Magnesium bzw. einer Aluminium- oder Magnesiumlegierung, besteht.

4. Querträger nach einem der vorhergehenden Ansprüche, **dadurch gekennzeichnet, dass** der Querträger im Innenhochdruckverfahren gebogen und / oder kalibriert ist.

5. Querträger nach einem der vorhergehenden Ansprüche, **dadurch gekennzeichnet, dass** der Übergangsbereich (4) eine Steigung von 1/40 oder kleiner aufweist.

## Claims

1. A crossmember between two lateral boundary regions of a vehicle structure comprising at least one retaining element for attaching functional components of the vehicle, wherein the crossmember carries the cockpit in a motor vehicle and in the axial direction comprises at least two portions (2, 3) with different wall thicknesses, optionally with different outer diameters, **characterised in that** the crossmember (1), which is in one piece, has a tubular cross-section, is made from variably rolled metal blanks, and a continuous transition region (4) is situated between the portions (2, 3).

2. A crossmember according to claim 1, **characterised in that** the crossmember (1) is made of steel.

3. A crossmember according to claim 1, **characterised in that** the crossmember (1) is made of a light metal such as aluminium or magnesium or an aluminium or magnesium alloy.

4. A crossmember according to any of the preceding claims, **characterised in that** it is bent and/or calibrated by the internal high-pressure process.

5. A crossmember according to any of the preceding claims, **characterised in that** the transition region (4) has a gradient of 1/40 or less.

## Revendications

1. Traverse placée entre deux zones marginales latérales d'une structure de véhicule ayant au moins un élément de fixation pour attacher les éléments fonctionnels du véhicule,
la traverse servant de support d'habitacle d'un véhicule automobile, et dans la direction axiale, la traverse se compose d'au moins deux segments (2, 3) d'épaisseur de paroi différente et, le cas échéant, de diamètre extérieur différent,
**caractérisée en ce que**
la traverse (1) en une seule pièce a une section tubulaire fabriquée à partir de platines laminées de manière variable et, entre les segments (2, 3), on a une région de transition (4), continue.

2. Traverse selon la revendication 1,
**caractérisée en ce que**
la traverse (1) est en acier.

3. Traverse selon la revendication 1,
**caractérisée en ce que**
la traverse (1) est en un métal léger tel que de l'aluminium ou du magnésium ou un alliage d'aluminium ou de magnésium.

4. Traverse selon l'une des revendications précédentes,
**caractérisée en ce qu'**
elle est cintrée selon un procédé de haute pression intérieure et/ou est calibrée.

5. traverse selon l'une des revendications précédentes,
**caractérisée en ce que**
la zone transitoire (4) a une pente de 1/40 ou moins.
